Europäisches Patentamt

European Patent Office

Office européen des brevets

(19)

(11) Veröffentlichungsnummer: **0 346 670 B1**

(12) **EUROPÄISCHE PATENTSCHRIFT**

(45) Veröffentlichungstag der Patentschrift: **14.07.93**

(51) Int. Cl.⁵: **C08G 18/72**, C08G 18/30

(21) Anmeldenummer: **89109607.5**

(22) Anmeldetag: **27.05.89**

(54) **Verfahren zur Herstellung von Polyurethan-Weichblockschaumstoffen.**

(30) Priorität: **11.06.88 DE 3819940**

(43) Veröffentlichungstag der Anmeldung:
**20.12.89 Patentblatt 89/51**

(45) Bekanntmachung des Hinweises auf die
Patenterteilung:
**14.07.93 Patentblatt 93/28**

(84) Benannte Vertragsstaaten:
**AT BE CH DE ES FR GB IT LI NL SE**

(56) Entgegenhaltungen:
**EP-A- 0 296 449**
**DE-A- 1 940 182**
**DE-A- 2 948 289**

**JOURNAL OF CELLULAR PLASTICS, Band 20,
Nr. 3, Mai/Juni 1984, Seiten 200-208, Westport, Connecticut, US; S. CONSOLI et al.: "Is
it really necessary to use an auxiliary blowing agent in the production of flexible slabstock polyurethane foams? First approach
to foams expanded with water only"**

(73) Patentinhaber: **BAYER AG**

**W-5090 Leverkusen 1 Bayerwerk(DE)**

(72) Erfinder: **Jacobs, Gundolf, Dr.**
**Wickenpfädchen 25**
**W-5060 Bergisch Gladbach 1(DE)**
Erfinder: **Haas, Peter, Dr.**
**Zwengenberger Strasse 43**
**W-5657 Haan 1(DE)**
Erfinder: **Illger, Hans-Walter, Dr.**
**Hasenfeld 13**
**W-5064 Rösrath-Forsbach(DE)**
Erfinder: **Kogelnik, Hans-Joachim, Dr.**
**Offenbachstrasse 16**
**W-5060 Bergisch Gladbach 2(DE)**
Erfinder: **Wolf, Klaus-Dieter, Dr.**
**Andreas-Gryphius-Strasse 22**
**W-5000 Köln 80(DE)**

EP 0 346 670 B1

**Beschreibung**

Polyurethanblockschaumstoffe im unteren Rohdichtebereich werden durch Kohlendioxid, das aus der Isocyanat-Wasser-Reaktion resultiert, oder durch die Kombination von in situ entstehendem Kohlendioxid und organischen Treibmitteln (z.B. Halogenkohlenwasserstoffen) aufgeschäumt. Schaumstoffe mit Rohdichten unter etwa 27 kg m⁻³ werden je nach Verwendung, solche unter etwa 21 kg m⁻³ werden generell durch Zusatz von Hilfstreibmitteln produziert, da die sonst erforderliche Wassermenge wegen der stark exothermen Isocyanat-Wasser-Reaktion oft zu starken Kernverfärbungen oder im Extremfall sogar zur Selbstentzündung der Schaumstoffblöcke führen kann. Ferner erhält man bei bestimmten Polyolen durch den Einsatz hoher Wassermengen (z.B. 4,5 Tle.) relativ harte und spröd-wirkende Schaumstoffe, die dem oft gewünschten Soft- und Hypersoft-Eigenschaftsbild entgegenstehen.

Alle bisher eingesetzten Hilfstreibmittel (Halogenkohlenwasserstoffe, Kohlenmonoxid aus dem AB-Verfahren, niedrig siedende Kohlenwasserstoffe etc.) führen zu einer starken Belastung und Gefährdung am Arbeitsplatz bzw. der Umwelt.

Trotz weltweit vieler Versuche wurde bisher kein umweltfreundliches Treibmittel vorgestellt.

Überraschend wurde nun gefunden, daß Wasser unter bestimmten Bedingungen sowohl als chemisches (Kohlendioxid aus der Isocyanat-Wasser-Reaktion) als auch als physikalisches Treibmittel wirken kann und somit alleine zur Erzielung von Rohdichten auch unter 21 kg m⁻³ verwendet werden kann.

Die Besonderheit des Verfahrens liegt darin, daß pro 100 Gew.-Tle "Basispolyol" die atypisch hohe Wassermenge von mehr als 5,0 Gew.-Tln. (bevorzugt 6 - 10 Gew.-Tle.) eingesetzt wird; gleichzeitig wird dabei nicht der bislang als praxisübliche Kennzahlbereich (90-120) gewählt, sondern man wählt eine bisher prohibitiv niedrige Kennzahl von weniger als 80, bevorzugt 65-40.

Die Verschäumung erfolgt nach normalen Weichschaum-Rezepturen mit speziellen Polyisocyanaten, vorzugsweise mit Toluylendiisocyanat, insbesondere solchem, das 80 Gew.-% 2,4-Isomeres und 20 Gew.-% 2,6-Isomeres enthält (T 80), wobei die resultierenden Schaumstoffe Rohdichte-Stauchhärte-Verhältnisse aufweisen, die bisher nur durch zusätzlichen Einsatz von Hilfstreibmitteln erzielt werden konnten.

Aus der GB-PS 892 776 ist bereits bekannt geworden, harte oder halbharte Polymerschaumstoffe durch Umsetzung von 100 Gew.-Teilen eines monomeren organischen Polyisocyanats mit 1 bis 30 Gew.-Teilen Wasser in Gegenwart eines oberflächenaktiven Mittels und eines Katalysators, vorzugsweise in Gegenwart von 5 bis 30 Gew.-Teilen einer polyfunktionellen Verbindung mit zwei oder mehr als zwei isocyanatreaktiven Gruppen, herzustellen. Wie jedoch aus den Ansprüchen und auch aus den Beispielen dieser GB-PS zu entnehmen ist, handelt es sich bei den verwendeten "Katalysatoren" um anorganische Produkte des Typs Kaliumacetat bzw. Natriumhydroxid, so daß ein überwiegend von Trimerisierungsreaktionen bestimmter Schäumungsablauf erzwungen wird und das erfindungsgemäße Prinzip einer niedrigen Kennzahl nicht zum Tragen kommt.

Die erfindungsgemäß herzustellenden PUR-Weichblockschaumstoffe unterscheiden sich von dem gemäß GB-PS 892 776 resultierenden harten und halbharten Schaumqualitäten insbesondere auch dadurch, daß sie eine andersartige Verformungscharakteristik aufweisen. Aus den z.B. bei Härtemessungen erhältlichen Verformungsdiagrammen läßt sich ableiten, daß die erfindungsgemäß hergestellten PUR-Weichblockschaumstoffe eine höhere Elastizität (= schnelleres Rückstellvermögen nach Belastung) und ein geringeres Härteniveau besitzen. Beides ist im Hinblick auf die anwendungstypischen Anforderungen von Vorteil. Als charakteristischer Wert für dieses Eigenschaftsmerkmal gilt die relative Energieabsorption nach 70 % Stauchung = H 70 (siehe hierzu Tabellen auf Seite 17 und 18).

Gegenstand der Erfindung ist ein Verfahren zur Herstellung von elastischen, offenzelligen Polyurethan-Weichblockschaumstoffen durch Umsetzung von

a) Polyisocyanaten mit

b) Verbindungen mit mindestens zwei gegenüber Isocyanaten aktiven Wasserstoffatomen vom Molekulargewicht 400 - 10.000 und gegebenenfalls

c) Kettenverlängerungs- und Vernetzungsmitteln mit mindestens zwei gegenüber Isocyanaten aktiven Wasserstoffatomen vom Molekulargewicht 32 - 399 in Gegenwart von

d) Wasser als Treibmittel und gegebenenfalls in Gegenwart von

e) anderen Treibmitteln, Katalysatoren und weiteren an sich bekannten Hilfs- und Zusatzmitteln,

das dadurch gekennzeichnet ist, daß

1. als Polyisocyanate a) solche vom Typ des Toluylendiisocyanats und/oder Hexamethylendiisocyanats und/oder Isophorondiisocyanat, und

2. Wasser als Treibmittel d) in einer Menge von 5 bis 15 Gew.-Teilen, bezogen auf 100 Gew.-Teile der Komponente b)

verwendet werden, wobei

3. die Umsetzung aller Komponenten bei einer Kennzahl von unter 80, vorzugsweise 40 - 65, durchgeführt wird.

Zur Herstellung der Polyurethan-Weichblockschaumstoffe werden erfindungsgemäß als Ausgangskomponenten verwendet:

1. Polyisocyanate vom Typ des Toluylendiisocyanats, z. B. das 2,4- und 2,6-Toluylendiisocyanat, sowie beliebige Gemische dieser Isomeren ("TDI"); ferner Hexamethylendiisocyanat und/oder Isophorondiisocyanat, ferner durch Carbodiimidgruppen, Urethangruppen, Allophanatgruppen, Isocyanuratgruppen, Harnstoffgruppen oder Biuretgruppen modifizierte Polyisocyanate, die sich vom 2,4- und/oder 2,6-Toluylendiisocyanat und/oder vom Hexamethylendiisocyanat und/oder Isophorondiisocyanat ableiten.

Anteilig (in Mengen bis zu 50 Gew.-%, bezogen auf die obengenannten Polyisocyanate) können auch andere an sich bekannte Polyisocyanate, z.B. auf Basis von MDI, mitverwendet werden.

Als erfindungsgemäß einzusetzende Polyisocyanate kommen vorzugsweise in Betracht:
- Toluylendiisocyanat als Gemisch der 2,4- und 2,6-Isomeren im Verhältnis 80 : 20 (T 80)
- Toluylendiisocyanat als Gemisch der 2,4- und 2,6-Isomeren im Verhältnis 65 : 35 (T 65)
- Toluylendiisocyanat-Prepolymere

2. Verbindungen mit mindestens zwei gegenüber Isocyanaten reaktionsfähigen Wasserstoffatomen von einem Molekulargewicht in der Regel von 400 - 10.000. Hierunter versteht man neben Aminogruppen, Thiolgruppen oder Carboxylgruppen aufweisenden Verbindungen vorzugsweise Hydroxygruppen aufweisende Verbindungen, insbesondere zwei bis acht Hydroxylgruppen aufweisende Verbindungen, speziell solche vom Molekulargewicht 1.000 bis 6.000, vorzugsweise 2.000 bis 6.000, z.B. mindestens zwei, in der Regel zwei bis acht, vorzugsweise aber 2 bis 6, Hydroxylgruppen aufweisende Polyether, Polyester, Polycarbonate und Polyesteramide, wie sie für die Herstellung von homogenen und von zellförmigen Polyurethanen an sich bekannt sind und wie sie z.B. in der DE-OS 2 832 253, Seiten 11 -18, beschrieben werden. Vorzugsweise weisen sie eine OH-Zahl von 28 bis 56 auf.

3. Gegebenenfalls Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 10 - 20, beschrieben.

4. Wasser als chemisches und physikalisches Treibmittel in einer Menge von 5 bis 15 Gew.-Teilen pro 100 Gew.-Teile "Basispolyol" b)

5. Gegebenenfalls Hilfs- und Zusatzmittel wie
a) leicht flüchtige organische Substanzen als weitere Treibmittel,
b) Reaktionsbeschleuniger und Reaktionsverzögerer der an sich bekannten Art in den an sich üblichen Mengen,
c) oberflächenaktive Zusatzstoffe, wie Emulgatoren und Schaumstabilisatoren,
ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trichlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 2 732 292, Seiten 21 - 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Durchführung des erfindungsgemäßen Verfahrens:
Die Reaktionskomponenten werden erfindungsgemäß nach dem an sich bekannten Einstufenverfahren, dem Präpolymerverfahren oder dem Semipräpolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121-205, beschrieben.

Die Umsetzung aller Komponenten erfolgt erfindungsgemäß bei einer Kennzahl unter 80, vorzugsweise bei einer Kennzahl von 40 - 65.

Die Kennzahl, ein bei der Herstellung von Polyurethanschaumstoffen sehr häufig verwendeter Begriff, sagt etwas über den Vernetzungsgrad Schaumstoffs aus. Es ist Gepflogenheit, denjenigen Schaumstoff als mit der Kennzahl 100 gefertigt zu betrachten, bei welchem die den stöchiometrischen Verhältnissen entsprechende, bzw. die theoretisch notwendige Menge an Isocyanat benutzt wurde. Mit Hilfe der Kennzahl ist es also möglich, den Grad der Unter-oder Übervernetzung näher zu definieren.

Die Kennzahl errechnet sich nach der allgemeinen Formel wie folgt:

$$\mathbf{Kennzahl} = \frac{\mathbf{Isocyanatmenge\ (praktisch)\ x\ 100}}{\mathbf{Isocyanatmenge\ (theoretisch)}}$$

Die erfindungsgemäß erhältlichen Polyurethan-Weichblockschaumstoffe weisen in der Regel Rohdichten von 8 - 27 kg/m$^3$, vorzugsweise von 10 - 20 kg/m$^3$ auf. Sie finden z.B. Anwendung bei der Herstellung von Sitzmöbeln. Ferner werden die erfindungsgemäß hergestellten Schaumstoffe z. B. als Füllung in Kissen und Decken verwendet.

Tabelle 1

| Mengenangaben in Gew.-Teilen | | | | | |
|---|---|---|---|---|---|
| Beispiel | | 1 | 2 | 3 | 4 |
| Polyether | A | 75 | 75 | - | - |
| | B | - | - | 100 | - |
| | C | - | - | - | 100 |
| | D | 25 | 25 | - | - |
| Katalysator | 1 | 0,5 | - | - | - |
| | 2 | - | 0,5 | 0,2 | 0,26 |
| | 3 | - | - | 0,12 | 0,14 |
| Stabilisator | 1 | 1,2 | 1,2 | - | - |
| | 2 | - | - | 1,2 | 1,6 |
| Wasser | | 7,0 | 10,0 | 9,0 | 6,0 |
| TDI 80 | | 41,2 | 53,5 | 47,0 | 41,6 |
| TDI 65 | | - | - | 11,8 | 10,4 |
| Kennzahl | | 54 | 50 | 65 | 72 |
| Rohdichte (kg m$^{-3}$) | | 16 | 15 | 16 | 20 |
| Stauchhärte (kPa) | | 0,4 | 0,9 | 1,9 | 2,2 |
| Härte bei 70 % Stauchung | | 42 | 43 | 41 | 46 |

Beispiele

Die Herstellung von Weichschaumblöcken erfolgte auf einer kontinuierlich arbeitenden Hochdruckmaschine (Fa. Hennecke, Birlinghoven, Siegkreis, Bundesrepublik Deutschland). Verschäumungsrezepturen sowie Prüfwerte der resultierenden Schaumstoffe sind in der vorhergehenden Tabelle angegeben:

Eingesetzte Polyether

Polyether A:    trifunktioneller langkettiger PO/EO-Polyether (ca. 70 % EO/OHZ = 36)
Polyether B:    trifunktioneller PO/EO-Polyether (ca. 14 % EO/OHZ = 35)

4

EP 0 346 670 B1

Polyether C: trifunktioneller langkettiger PO/EO-Polyether, abgemischt mit einem sechsfunktionellen, kurzkettigen Vernetzer (insgesamt ca. 17 % EO/OHZ = 67)

Polyether D: di- und trifunktioneller langkettiger PO/EO-Polyether (ca. 10 % EO/OHZ = 46)

Eingesetzte Katalysatoren und Stabilisatoren

Katalysator 1: Triethylendiamin/33 %ig in Dipropylenglykol
2: Zinn(II)octoat
3: Desmorapid® PS 207 (Bayer AG)

Stabilisator 1: Tegostab® BF 2270 (Th. Goldschmidt AG)
2: Tegostab® B 3136 (Th. Goldschmidt AG)

Bei den aufgeführten Beispielen wurden folgende Isocyanate eingesetzt:

TDI 80: Toluylendiisocyanat, Gemisch aus 2,4- und 2,6-Diisocyanatotoluol im Gew.-Verhältnis 80:20

TDI 65: Toluylendiisocyanat, Gemisch aus 2,4- und 2,6-Diisocyanatotoluol im Gew.-Verhältnis 65:35

## Patentansprüche

1. Verfahren zur Herstellung von elastischen, offenzelligen Polyurethan-Weichblockschaumstoffen durch Umsetzung von
   a) Polyisocyanaten mit
   b) Verbindungen mit mindestens zwei gegenüber Isocyanaten aktiven Wasserstoffatomen vom Molekulargewicht 400 bis 10.000 und gegebenenfalls
   c) Kettenverlängerungs- und Vernetzungsmitteln mit mindestens zwei gegenüber Isocyanaten aktiven Wasserstoffatomen vom Molekulargewicht 32 - 399 in Gegenwart von
   d) Wasser als Treibmittel und gegebenenfalls in Gegenwart von
   e) anderen Treibmitteln, Katalysatoren und weiteren an sich bekannten Hilfs- und Zusatzmitteln,
   dadurch gekennzeichnet, daß
   1. als Polyisocyanate a) solche vom Typ des Toluylendiisocyanats und/oder Hexamethylendiisocyanats und/oder Isophorondiisocyanats, und
   2. Wasser als Treibmittel d) in einer Menge von 5 bis 15 Gew.-Teilen, bezogen auf 100 Gew.-Teile der Komponente b) verwendet werden, wobei
   3. die Umsetzung aller Komponenten bei einer Kennzahl von unter 80, vorzugsweise 40 - 65, durchgeführt wird.

2. Verfahren nach Anspruch 1, dadurch gekennzeichnet, daß die Weichschaumstoffe Rohdichten von 8 - 27 kg/m$^3$, bevorzugt 10 - 20 kg/m$^3$, aufweisen.

## Claims

1. A process for the production of elastic, open-cell flexible slabstock polyurethane foams by reaction of
   a) polyisocyanates with
   b) compounds containing at least two isocyanate-reactive hydrogen atoms and having a molecular weight of 400 to 10,000 and, optionally,
   c) chain-extending and crosslinking agents containing at least two isocyanate-reactive hydrogen atoms and having a molecular weight of 32 to 399 in the presence of
   d) water as blowing agent and, optionally, in the presence of
   e) other blowing agents, catalysts and other auxiliaries and additives known per se,
   characterized in that
   1. the polyisocyanates a) used are of the tolylene diisocyanate and/or hexamethylene diisocyanate and/or isophorone diisocyanate type and
   2. water is used as blowing agent d) in a quantity of 5 to 15 parts by weight to 100 parts by weight of component b),
   3. the reaction of all the components being carried out at an index below 80 and preferably from 40 to 65.

2. A process as claimed in claim 1, characterized in that the flexible foams have densities of 8 to 27 kg/m$^3$ and preferably 10 to 20 kg/m$^3$.

5

**EP 0 346 670 B1**

**Revendications**

1. Procédé de production de mousses en blocs souples de polyuréthanne élastiques et à cellules ouvertes par réaction

   a) de polyisocyanates avec

   b) des composés ayant au moins deux atomes d'hydrogène actifs vis-à-vis d'isocyanates, de poids moléculaire allant de 400 à 10 000 et, le cas échéant

   c) des agents d'allongement de chaîne et des agents de réticulation portant au moins deux atomes d'hydrogène actifs vis-à-vis d'isocyanates, d'un poids moléculaire de 32 à 399, en présence

   d) d'eau comme agent porogène et, le cas échéant, en présence

   e) d'autres agents porogènes, catalyseurs et autres substances auxiliaires et additifs connus,

   caractérisé en ce que

   1. on utilise comme polyisocyanates a) des polyisocyanates du type du diisocyanatotoluène et/ou de l'hexaméthylènediisocyanate et/ou de l'isophoronediisocyanate, et

   2. de l'eau comme porogène d) en une quantité de 5 à 15 parties en poids, pour 100 parties en poids du composé b),

   3. la réaction de tous les composants étant conduite pour un nombre caractéristique inférieur à 80, allant de préférence de 40 à 65.

2. Procédé suivant la revendication 1, caractérisé en ce que les mousses souples présentent des densités apparentes de 8 à 27 kg/m$^3$, de préférence de 10 à 20 kg/m$^3$.

6